Europäisches Patentamt

European Patent Office

Office européen des brevets

(19)

(11) Publication number: **0 315 717**
**A1**

(12) # EUROPEAN PATENT APPLICATION

(21) Application number: **87309928.7**

(22) Date of filing: **10.11.87**

(51) Int. Cl.⁴: **H02K 29/00**

The title of the invention has been amended (Guidelines for Examination in the EPO, A-III, 7.3).

(43) Date of publication of application:
**17.05.89 Bulletin 89/20**

(84) Designated Contracting States:
**AT BE CH DE ES FR GB GR IT LI LU NL SE**

(71) Applicant: **Yang, Tai-Her**
**5-1 Taipin Street**
**Si-Hu Town Dzan-Hwa(TW)**

(72) Inventor: **Yang, Tai-Her**
**5-1 Taipin Street**
**Si-Hu Town Dzan-Hwa(TW)**

(74) Representative: **Arthur, Bryan Edward et al**
**Withers & Rogers 4 Dyer's Buildings Holborn**
**London EC1N 2JT(GB)**

(54) **Generation of a rotary magnetic field of AC motor by rectification of the multi-phase power supply.**

(57) This is the demonstration concerning the multi-phase full wave or semiwave DC output power supply to generate the rotary magnetic field of AC motor. It is mainly to output current via the AC motor with uniformly distributed mechanical angles magnetic pole sets winding around the iron core of the motor in same polarity respectfully to be controlled by independent full wave bridge type rectification providing three phase power supply separately by three phase or three's multiple phase power supply to input into the above coil winding to constitute combined magnetic field and form further the rotary magnetic field in accordance with the order of the phase. The practical feature of the design would generate, taking the structure of the three set coil winding as an example, 7200 rpm rotary magnetic field to be driven by 60 hz three phase power source and break through the present limit of 3600 rpm at most on the basis of 2P; if it is used to drive the motor with two set same polarity coil winding and phase-splitting coil winding, 21600 rpm rotary magnetic field might be generated. In practical application it may change the torque of the rotary magnetic field of the motor via the setting or variation of the conducting phase angle, and attain slower rotating speed to enlarge the practicability via the above semiwave input or AC direct input. This design is applicable to the driving of the rotary magnetic field of conventional synchronous AC motor, step motor, AC asynchronous induction motor, etc. to attain the above effect.

EP 0 315 717 A1

Fig. 2

Fig 1

## THE PRINCIPLE AND DESIGN TO GENERATE ROTARY MAGNETIC FIELD OF AC MOTOR VIA MULTI-PHASE FULL WAVE OR SEMLWAVE DC OUTPUT POWER SUPPLY

### BACKGROUND OF THE INVENTION:

This case is the CIP Application of USA Patent Application Serial No. 918984. It is a new design of AC three phase motor rotary magnetic field to generate rotary magnetic field with a speed twice faster than that of the conventional two pole motor via three or three's multiple same polarity magnetic poles coil winding distributed around the iron core in 120 electrical degrees mutually, each pole coil winding being driven by the power supply of the adjustable phase angle of respective phase full wave separately in order to attain the high speed of the motor exceeding that of the rotary field of existing inductor.

### SUMMARY OF THE INVENTION:

This is the demonstration concerning the multi-phase full wave or semiwave DC output power supply to generate the rotary magnetic field of AC motor. It is mainly to output current via the AC motor with uniformly distributed mechanical angles magnetic pole sets winding around the iron core of the motor in same polarity respectfully to be controlled by independent full wave bridge type rectification providing three phase power supply separately by three phase or three's multiple phase power supply to iuput into the above coil winding to constitute combind magnetic field and form futher the rotary magnetic field in accordance with the order of the phase. The practical feature of the design would generate, taking the structure of the three set coil winding as an example, 7200 rpm rotary magnetic field to be driven by 60 hz three phase power source and break through the present limit of 3600 rpm at most on the basis of 2P; if it is used to drive the motor with two set same polarity coil winding and phase-splitting coil winding, 21600 rpm rotary magnetic field might be generated. In practical application it may change the torque of the rotary magnetic field of the motor via the setting or variation of the conducting phase angle, and attain slower rotating speed to enlarge the practibility via the above semiwave input or AC direct input. This design is applicable to the driving of the rotary magnetic field of conventional synchronous AC motor, step motor, AC asynchronous induction motor, etc. to attain the above effect.

### BRIEF DESCRIPTION OF THE DRAWINGS:

Drawing 1 & 2 Example of varied application of this invention.
Drawing 3 Example of the circuit with full wave driving and direct AC power supply low speed driving.
Drawing 4 Exmaple of the full wave bridge driving circuit via mixing gate current and rectifier.
Drawing 5 A comparison of the three phase power supply to be output at 60° phase angle after full wave rectification and the wave form of the original power supply.
Drawing 6 The process of action of the rotary magnetic field shown in Drawing 5.
Drawing 7 A comparison of the three phase power supply to be output at 120° phase angle after full wave rectification and the wave form of the original power supply.
Drawing 8 The process of the action of the rotary magnetic field shown in Drawing 7.
Drawing 9 A comparison of the three phase power supply after full wave rectification and the wave form of the original power supply.
Drawing 10 The process of the action of the rotary magnetic field shown in Drawing 9.
Drawing 11 A comparison of the three phase power supply after semiwave rectification to be output at 60° phase angle and the wave form of the original power supply.
Drawing 12 The process of action of the rotary magnetic field shown in Drawing 11.
Drawing 13 A comparison of the three phase power supply after semiwave to be output at 120° phase angle and the wave form of the original power supply.
Drawing 14 The process of the action of the rotary magnetic field shown in Drawing 13.
Drawing 15 A comparison of the three phase power supply after semiwave rectification and the wave form of the original power supply.
Drawing 16 The process of the action of the rotary magnetic field shown in Drawing 15.

Drawing 17 Example 1 of the circuit to drive two sets same polarity coil winding with three phase semiwave power supply.

Drawing 18 Example 2 of the circuit to drive two sets same polarity coil winding with three phase semiwave power supply.

DETAILED DESCRIPTION OF THE INVENTION

The operating turns of the conventional three phase or three's multiple phase AC synchronous motor, step motor or asynchronous motor, or the turns of the rotary magnetic field of coil wound rotor motor are restricted by the following formula:

$$N = \frac{120}{P} \times f$$

So the maximum turns of the rotary magnetic field of the induction motor for commercial use 60 hz developed heretobefore is 3600 rpm at 2P (3000 rpm at 50H) to make the application of the motor on high speed to be restricted, it is very inconvenient and could only be achieved by accelerating or frequency rasising through accelerating driving organism, such as, belt or gear.

This design is mainly the single or multiple set concentric or overlapping winding magnetic poles in mechnaical angles distributed uniformly to be wound around the iron core in same polarity driving separately by multiple phase full wave or semiwave DC power supply, it is explained herein by the example of the application range shown in Drawing 1 and 2 constituted by single or multiple set concentric overlapping coil winding wound around the iron core to be distributed uniformly in 120° phase angles and same polarity, this combined application of motor and three phase power source as shown in Drawings 1 and 2 has two series of combination, that is, to combine it with the three phase full wave power supply and the three phase semiwave power supply.

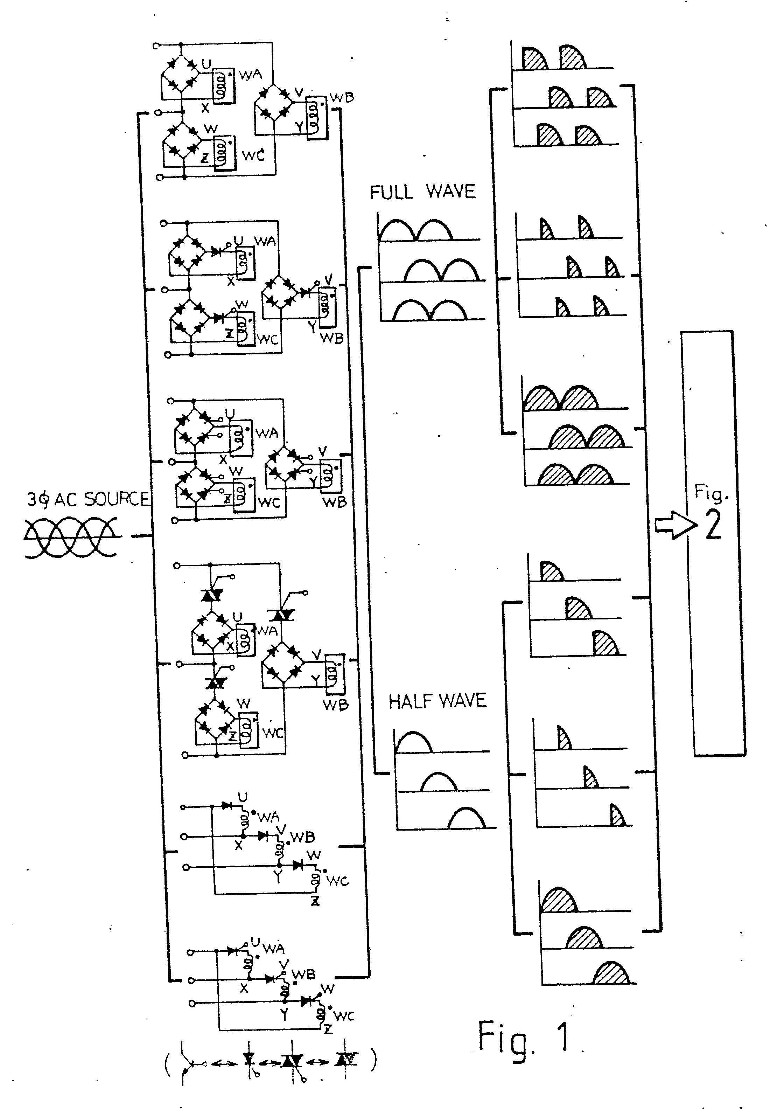

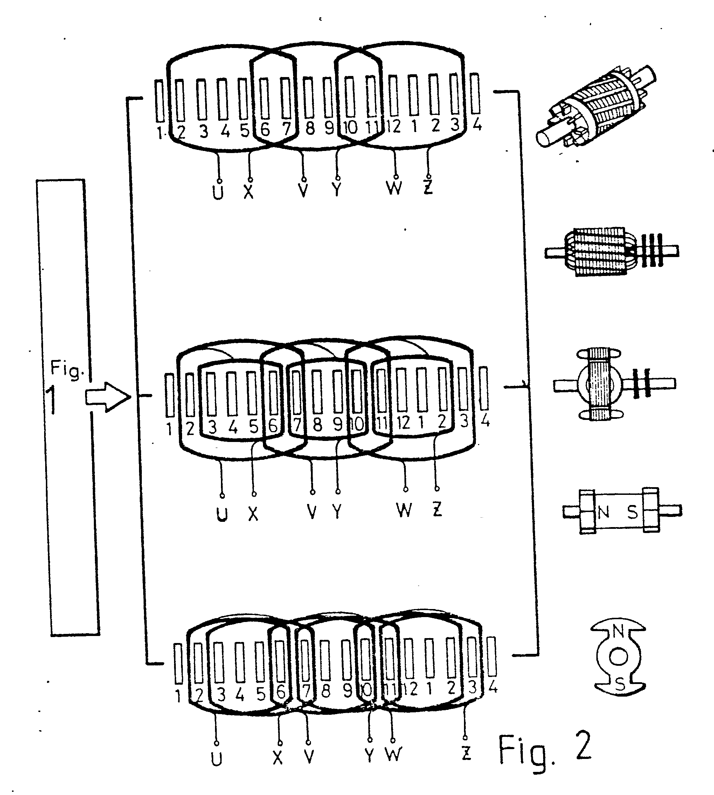

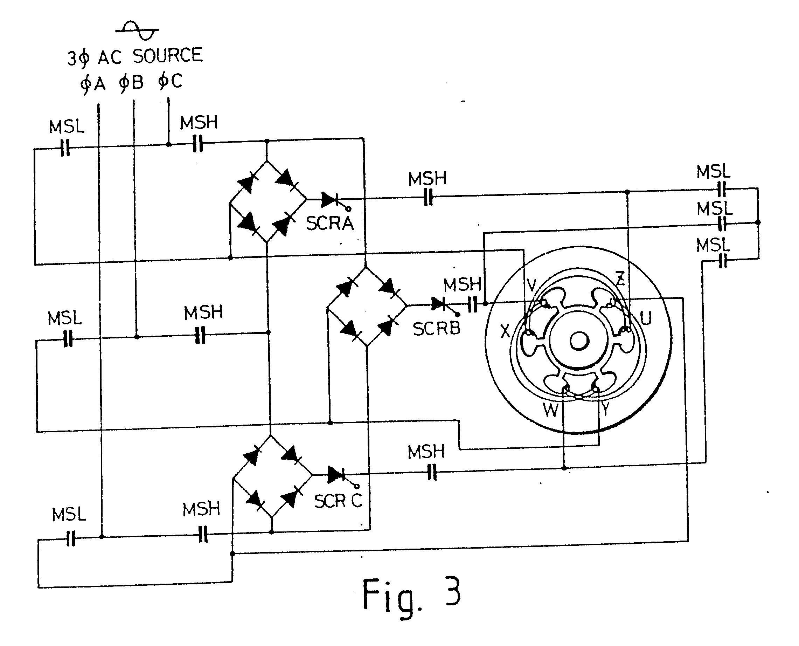

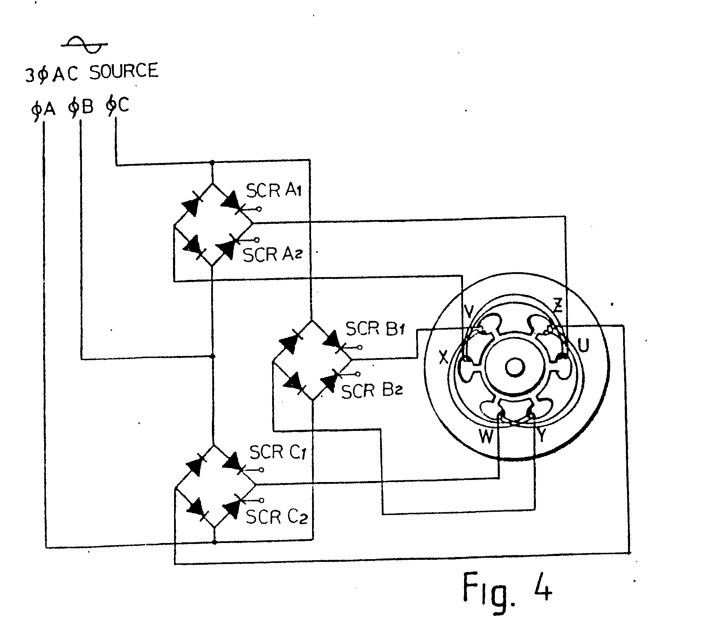

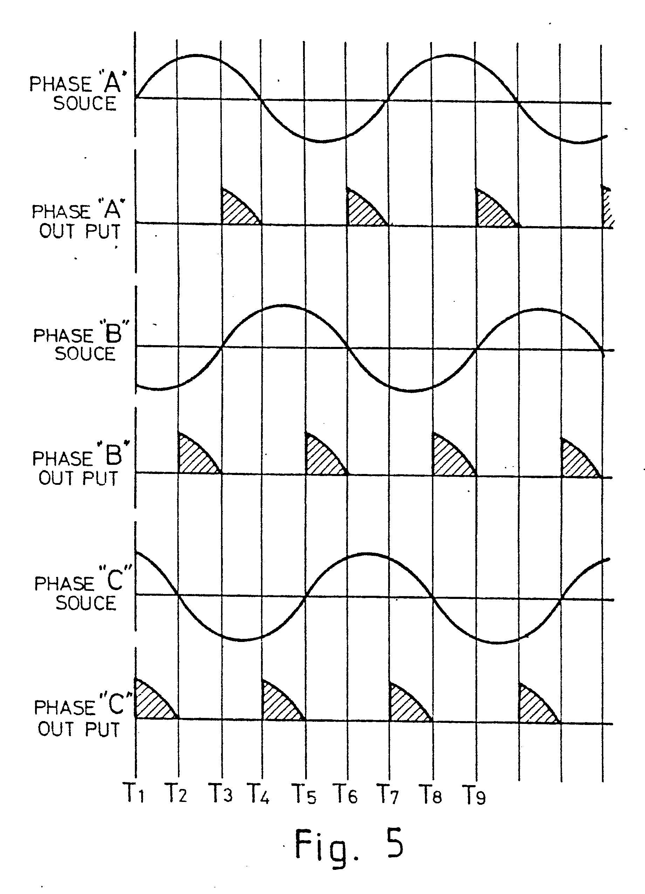

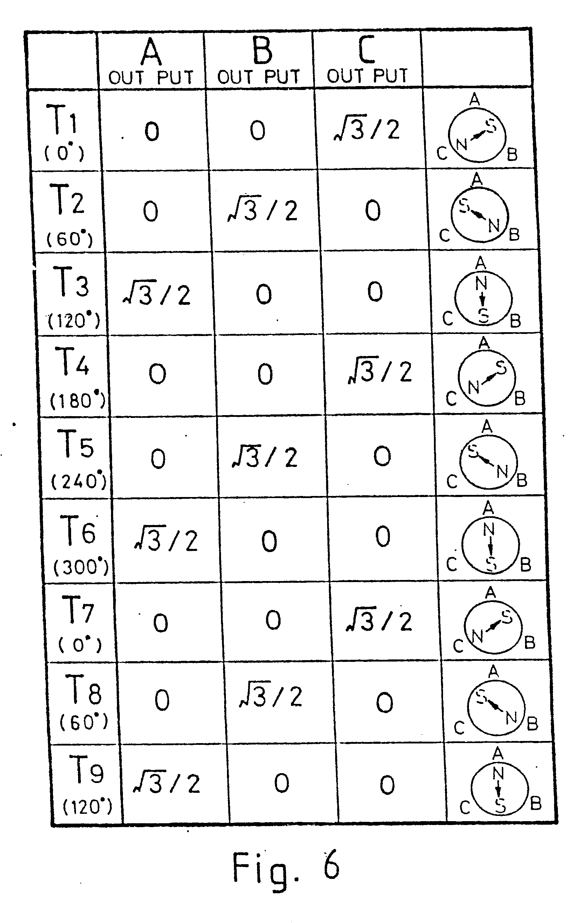

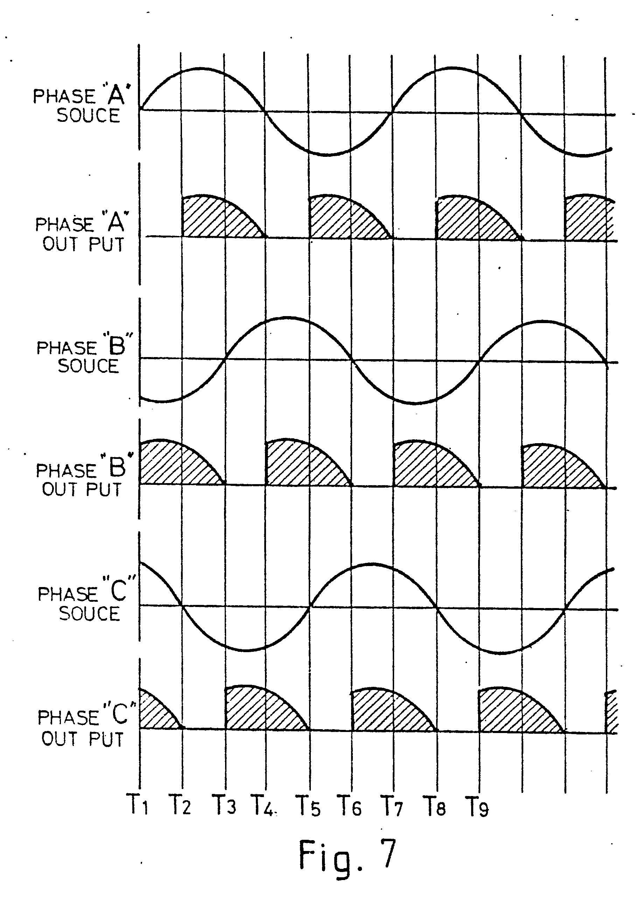

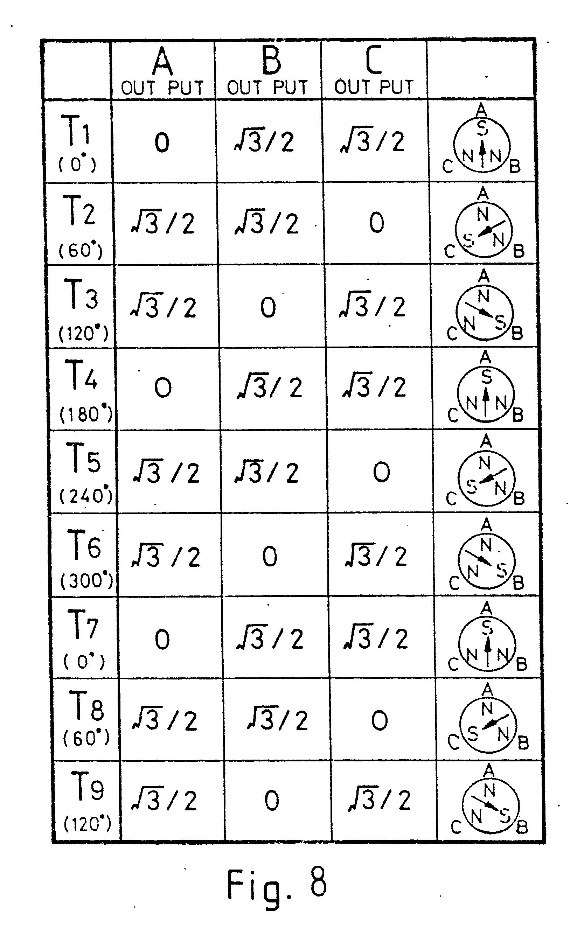

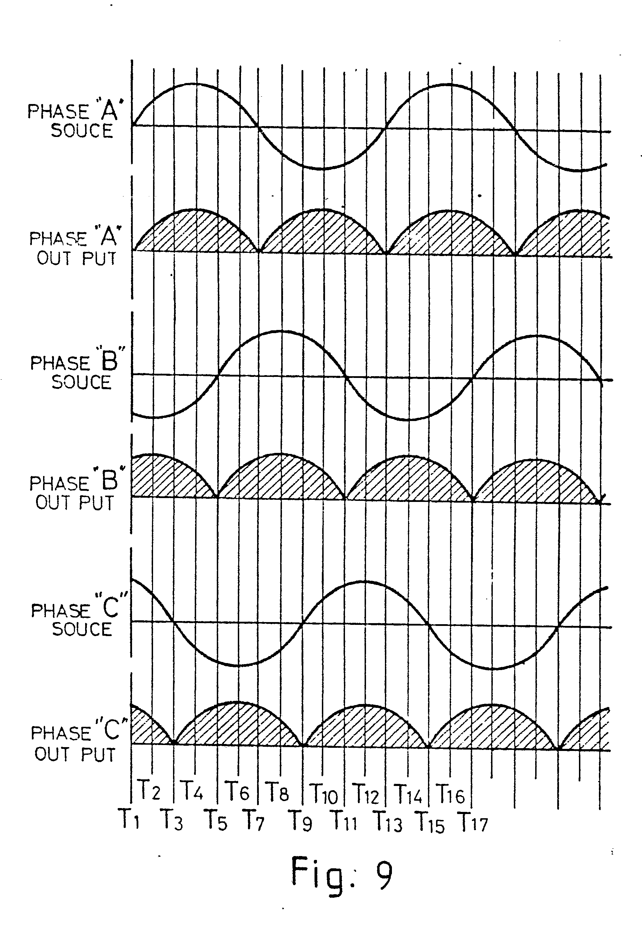

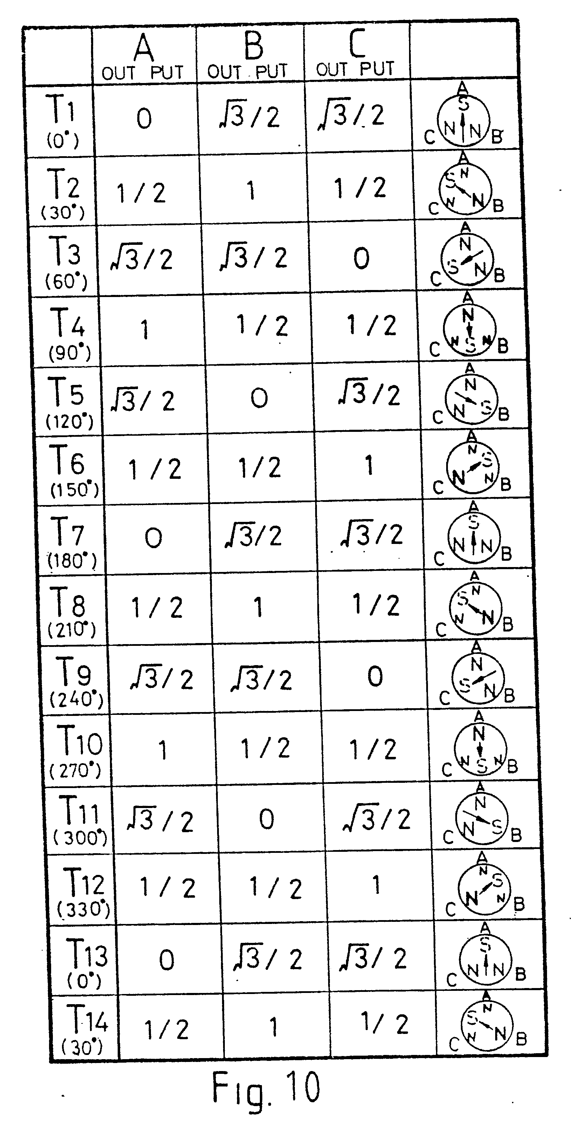

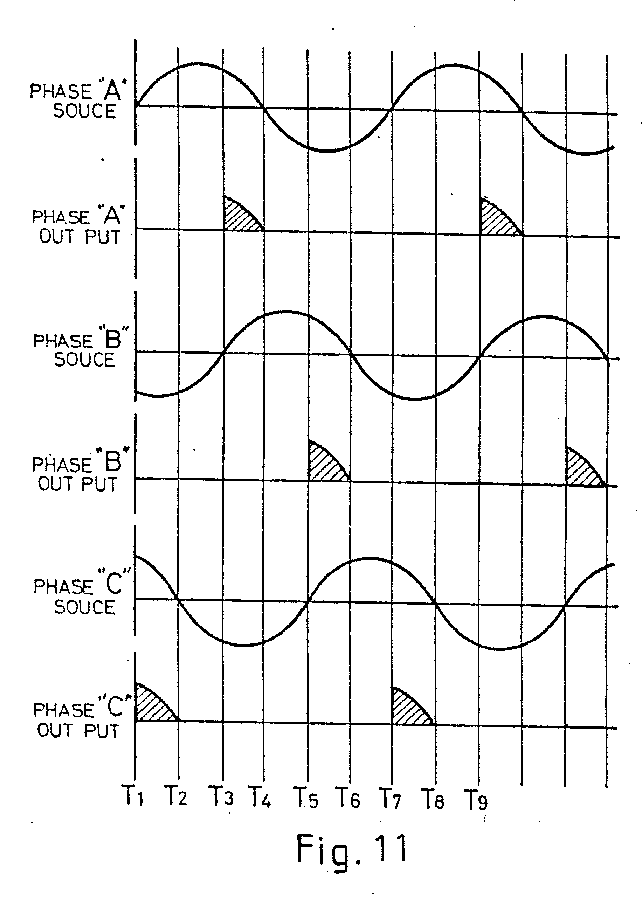

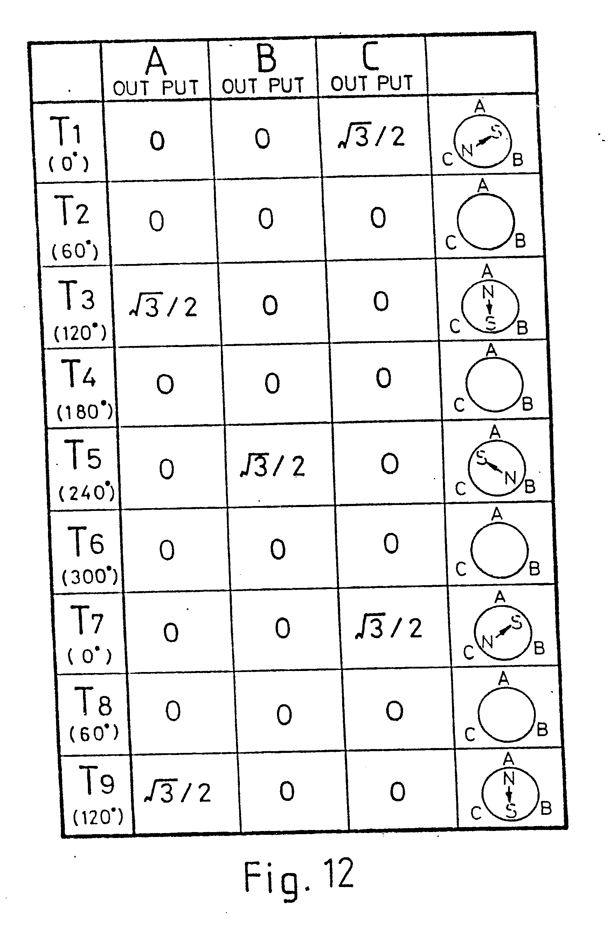

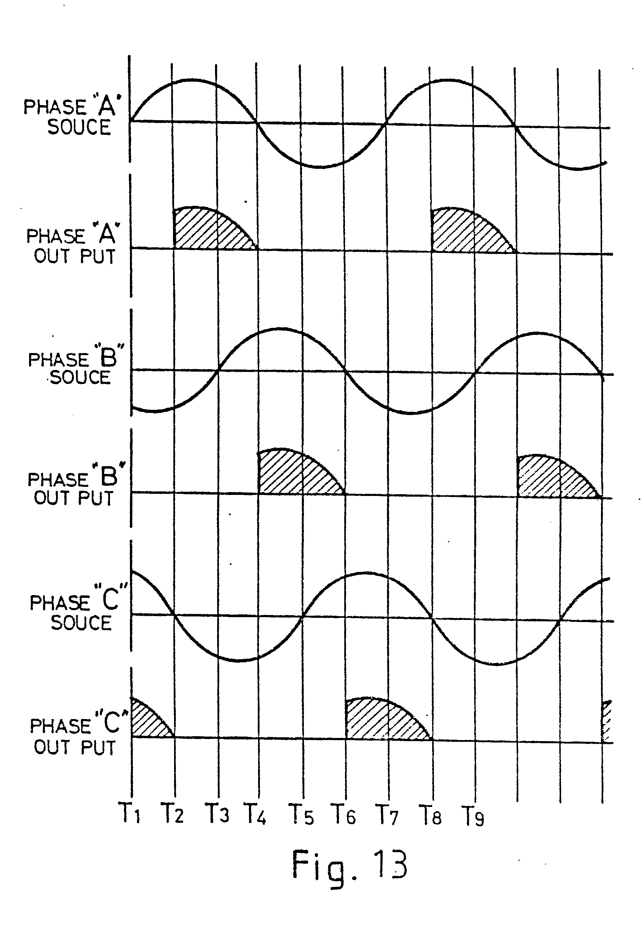

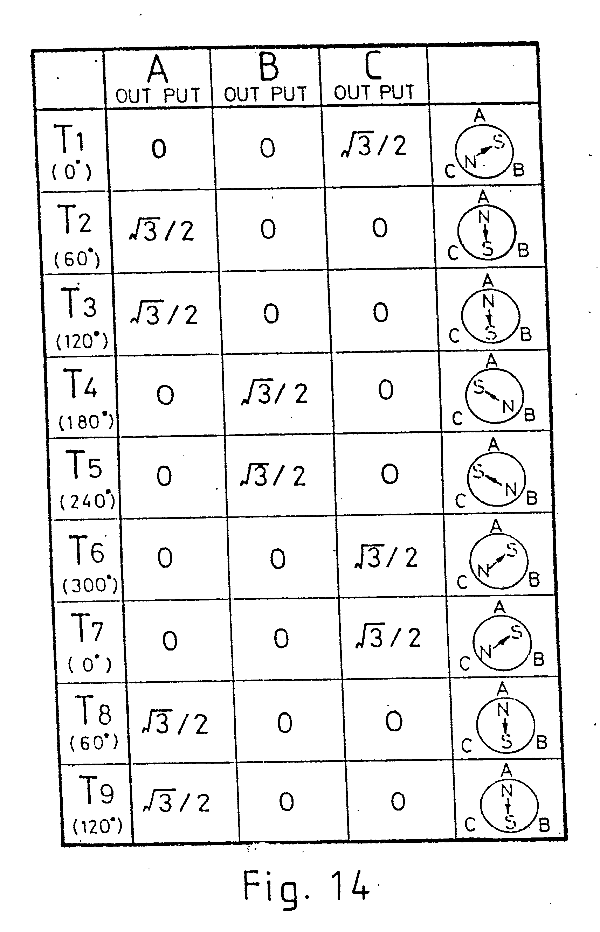

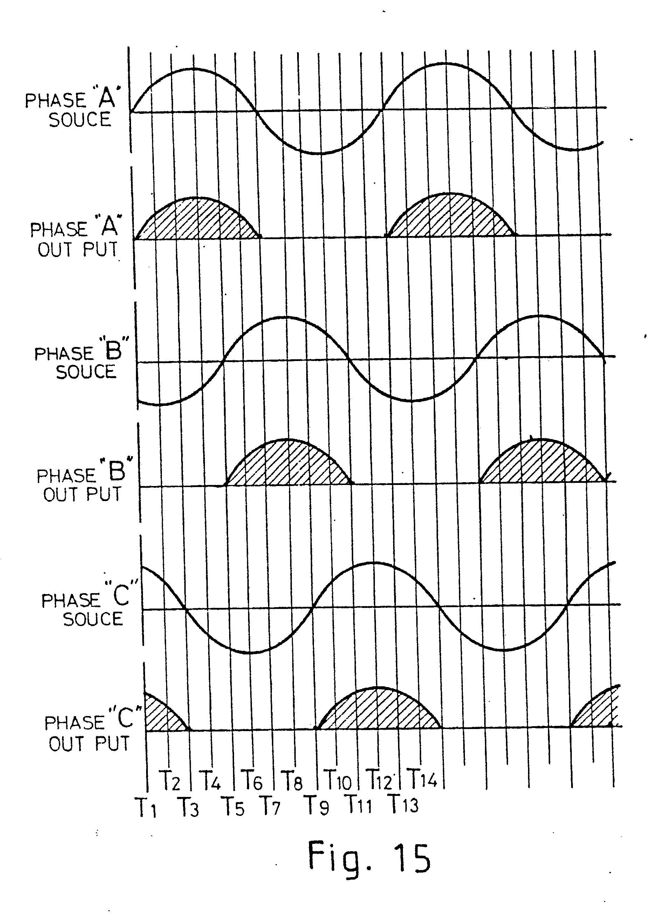

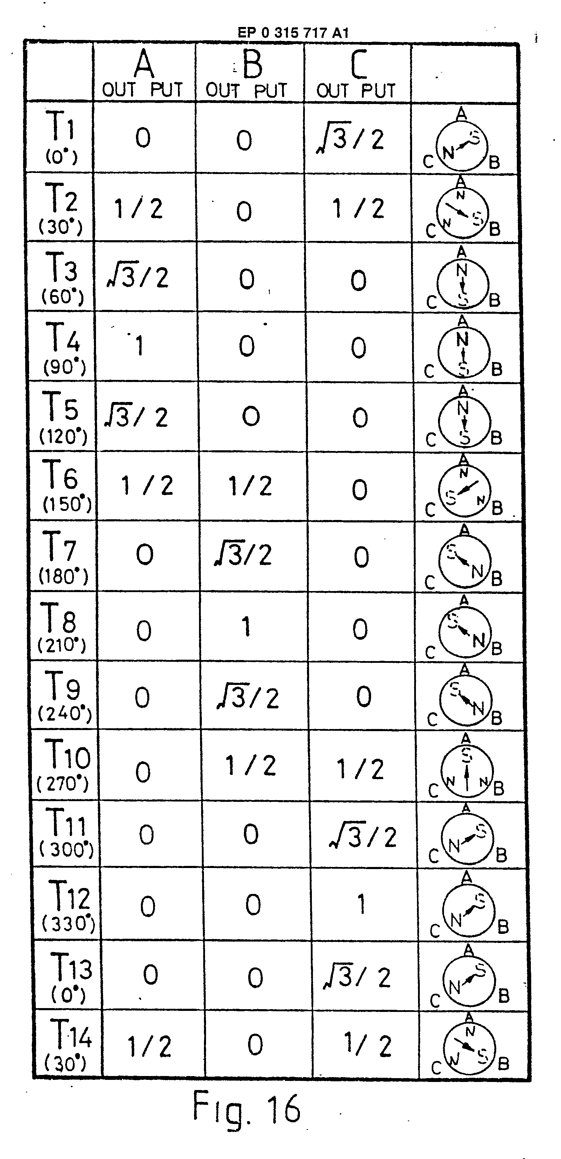

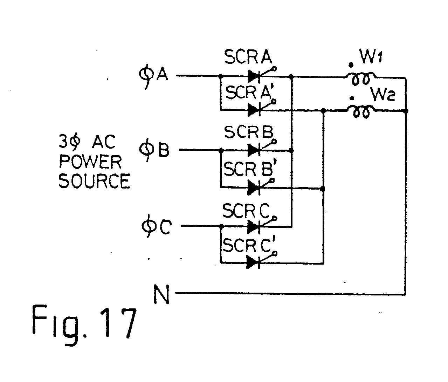

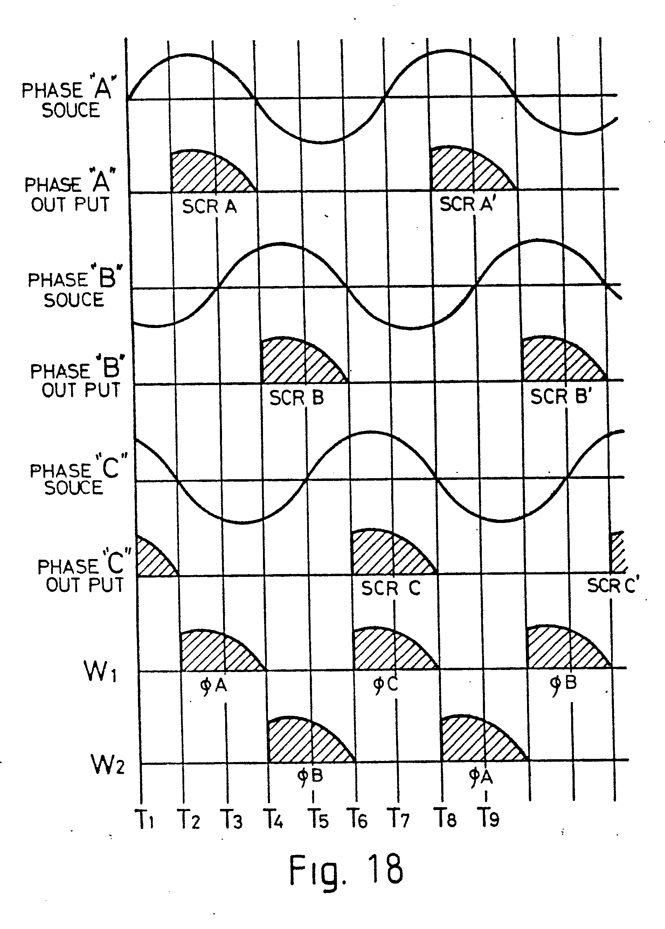

Drawing 3 is an example of the circuit providing full wave driving and direct AC power supply low speed driving, in which the operation is performed by feeding three phase power supply or driven by full wave controllable angle of current conduction DC current. In the Drawing MSH is high speed switch system, MSL is low speed switch system, while MSH is closed, the rotary magnetic field acts in accordance with the change of the angle of current conduction as shown in Drawings 6 to 10; while MSL is closed, the rotary magnetic field is in the state of polarity of 2P and generate the rotating speed being 1/2 of that of the high. speed; or as shown in Drawing 4, the circuit gives and example of full wave bridge driving via mixing gate current and rectifier in which each phase selected one set of SCR in same phase order (as shown in the Drawing, SCRA, SCRB and SCRC are a set in same phase order) to be triggered off and fed in semiwave direct current to generate 2P rotary magnetic field for two speeds operation or two steps initiation to raise the speed from 0 to 3600 rpm to 7200 rpm.

The above three phase full wave and semiwave power supply may adjust the output conductive phase angle to change the voltage input into the coil winding of the motor except the output in fixed conductive phase angle to drive the motor and change the torque further.

The explanation of the principle of the above AC motor rotary magnetic ield to be driven by poly phase full wave direct current output power supply is given as follows:

In normal operation, the mixing phase control cirduit constituted by the rectifying diode with varied coil winding and varied phase power supply to be connected in series respecitvely and SCR may attain the option of output phase angle from 0 to 180° (preferably 0 to 120°) via initiation the control of the circuit or setting the output phase angle at a fixed angle; the rotary magnetic field may be generated via the input of the above power supply into the motor with three sets or three's multiple sets in the difference of phase angle of 120° mutually same polarity coil winding, please refer to the following Drawings, among which Drawing 5 is the comparison of the output at 60° phase power supply after full wave rectification and the wave form of the original power supply.

Drawing 6 is the process of action of the rotary magnetic field shown in Drawing 15.

From the above examples we found the following principles:

(1) While the same polarity magnetic axis constituted by two set coil winding with the angle difference of motor similar to the known phase-splitting initiating single phase induction motor.

(2) Poles of varied set same polarity magnetic axis coil windings may be increased by adding N multiple coil winding extended in accordance with the original order of distribution and the feature of same polarity to drop the rate of speed of the rotary magnetic field, after the increasing in multiples of the coil windings, the mechanical angle spacing between same polarity magnetic axies is

$$\frac{\text{Mechanical angle spacing between original magnetic poles,}}{N}$$

the crossing distance of varied pole coil windings is

$$\frac{\text{Original coil windings crossing distance}}{N}$$

the newly increased coil windings are connected in series or in parallel to the power supply in same phase in accordance with the original order of phase and coil winding; the above N is an integer; after increased N poles, the rotary magnetic field is

$$\frac{\text{rate of speed of original rotary megnetic field}}{N}$$

through the multipied increase of poles, a lot of new rotating speed of the rotary megnetic field might be attained.

(3) The number of phase must be equal to or an integral multiple of the number of the magnetic poles with same polarity (after the multiplication of varied sets coil windings of above (2) and connected in series or in parallel, they are considered to be one set).

(4) If the multiple stated in item (3) is not an integral number, a distributing switch must be installed between the output with varied phases and the magnetic pole coil windings in same polartity and distributed by predetermined order distributing device. Drawings 17 and 18 examples to drive two sets same polarity coil windings W1 and W2 by three phase semiwave power supply simply, in which each phase has two sets output distributing switch to be used in the SCR controlling the conductive phase simultaneously and connected to two sets magnetic pole in same polarity of the motor in parallel respectfully for intercrossing input, the conductive phase angle is 0 to 180° being adjustable or able to be set (taking 120° as an example in the Drawing).

(5) The relationship among the rotary magnetic field, the frequency of power supply and the magnetic poles in same polarity is

$$A \text{ in semiwave, } N = \frac{120 \text{ X } 60 \text{ X phase number}}{\text{number of magnetic poles in same polarity X 2}}$$

$$B \text{ in full wave, } N = \frac{120 \text{ X } 60 \text{ X number of phase}}{\text{number of magnetic poles in same polarity}}$$

In practical application, the above design may be concentric coil winding or overlapping winding to be applicable to varied applications, the operation of obverse and reverse revolving, starting, stop, etc. are the same as conventional ones. In addition, the number of coil windings of this design under the same rated rotating speed is less than that of the conventional manufacturing method and helpful to the simplification of manufacture, and the DC input after rectification may improve somewhat the power factor of the induction motor.

In summary of the above, the practical features of this design are:

----- Varied sets are wound in the trough of the iron core of the motor concentrically or overlappingly in same polarity single or multiple set magnetic poles to be connected externally to DC output terminals of varied single phase with indepent full wave or semiwave rectification of the three phase or three's multiple phase AC current power supply; or the above full wave rectification is used as the power supply device to set the conductive phase angle;

----- Varied poles coil winding magnetic axes to be distributed in uniform mechanical angles and distributed on the basis of same polarity winding around the iron core (or with trifle value of difference);

----- In practical application by using the rotary magnetic field, the above motor may drive the conventional AC synchronous motor (including step motor) and asynchronous motor, such as, inductive cage rotor, winding rotor, magnetic hysteresis rotor, etc., and attain the reversion through the change of the relationship of the order of phase initiated exactly as that of the conventional AC conduction motor.

Through the new operation principle and function of the motor to be wound with uniform distribution of the mechanical angles of same polarity magnetic poles in the input of poly phase AC full wave or semiwave rectification power supply to drive the rotary magnetic field of the motor to provide the extreme high speed several times higher than that of the conventional ones, the function is definitely explicit. You are requested to examine and papprove it according to law.

**Claims**

1. A kind of AC motor rotary magnetic field to be driven by poly phase full wave or semiwave DC output power supply, the principle and circuit include:

----- Two set or more coil windings to be wound around the iron core of the motor in the difference of uniform mechanical angles respectfully, the magnetic poles are constituted concentrically or overlappingly with single set or multiple sets in same polarity coil winding;

----- It has full wave bridge rectification provided by separate phase of three phase or three's multiple phase AC power supply, and control further the respecful input to varied magnetic pole coil winding of the output current by the inductive phase angle, the above coil windings constituted combined magnetic field and form the rotary magnetic field in accordance with the order of phase of the three phase power supply. The special feature of this design is shown in the relationship among the roraty magnetic field, the frequency of power supply and same polarity magnetic poles as follows:

2. The motor stated in Claim 1 refers especially to that to be wound with varied coil windings in same polarity and a mutual difference of 120° motor angles and mechanical angles distribution existibg among magnetic axes to be driven by rectified AC power supply with adjustable or fixing conductive phase angle to generate AC motor rotary magnetic field.

3. The three phase input power supply of the motor stated in Claim 1 and 2 includes the semiwave input of separate set and that providing further the device of the conductive angle control, the preferable working phase angle in three phase full wave power supply is 0 to 120°, in three phase semiwave power supply is 0 to 360°, in 12 phase semiwave power supply is 0 to 60°, and in 12 phase full wave power supply is 0 to 30°.

4. The motor stated in Claim 1 is constituted further by two sets or tow's multiple sets same polarity windings with mechanical angles distributed uniformly, the features are:

----- Two sets same polarity magnetic axes are distributed in 180° mechanical angles with phase-splitting initiating coil windings;

----- Poles of varied sets same polarity magnetic axis coil winding may be increased N times in accordance with the extension of the original distribution phase order and the characteristics of same polarity to decrease the rate of speed of the rotary magnetic field; after the multification of the coil windings, the spacing of mechanical angles among the same polarity magnetic axes is

$$\frac{\text{mechanism among original magnetic poles}}{N}$$

The crossing distance among the coil winding of varied poles is

$$\frac{\text{crossing distance among original coil windings}}{N}$$

----- The newly increased coil windings are connected in series or in parallel to the power supply with same phase together with the original coil windings in accordance with roiginal order of phase;

----- The above N is an integral number;

----- After the magnetic poles increased N times, the rotary magnetic field is

5. The newly increased coil windings are connected in series or in parallel to the power supply with same phase together with the original coil windings rotor, magnetic hysteresis or other three phase AC motor.

6. The motor stated in Claim 1 to 5 is able to change the relationship of the order of phase between varied coil windings and the driving power supply to change the direction of operation.

FULL WAVE

HALF WAVE

3φ AC SOURCE

Fig. 2

Fig. 1

Fig. 1

Fig. 2

Fig. 3

Fig. 4

PHASE "A"
SOUCE

PHASE "A"
OUT PUT

PHASE "B"
SOUCE

PHASE "B"
OUT PUT

PHASE "C"
SOUCE

PHASE "C"
OUT PUT

T₁ T₂ T₃ T₄ T₅ T₆ T₇ T₈ T₉

Fig. 5

| | A OUT PUT | B OUT PUT | C OUT PUT | |
|---|---|---|---|---|
| $T_1$ (0°) | 0 | 0 | $\sqrt{3}/2$ | |
| $T_2$ (60°) | 0 | $\sqrt{3}/2$ | 0 | |
| $T_3$ (120°) | $\sqrt{3}/2$ | 0 | 0 | |
| $T_4$ (180°) | 0 | 0 | $\sqrt{3}/2$ | |
| $T_5$ (240°) | 0 | $\sqrt{3}/2$ | 0 | |
| $T_6$ (300°) | $\sqrt{3}/2$ | 0 | 0 | |
| $T_7$ (0°) | 0 | 0 | $\sqrt{3}/2$ | |
| $T_8$ (60°) | 0 | $\sqrt{3}/2$ | 0 | |
| $T_9$ (120°) | $\sqrt{3}/2$ | 0 | 0 | |

Fig. 6

Fig. 7

| | A OUT PUT | B OUT PUT | C OUT PUT | |
|---|---|---|---|---|
| T1 (0°) | 0 | √3/2 | √3/2 | |
| T2 (60°) | √3/2 | √3/2 | 0 | |
| T3 (120°) | √3/2 | 0 | √3/2 | |
| T4 (180°) | 0 | √3/2 | √3/2 | |
| T5 (240°) | √3/2 | √3/2 | 0 | |
| T6 (300°) | √3/2 | 0 | √3/2 | |
| T7 (0°) | 0 | √3/2 | √3/2 | |
| T8 (60°) | √3/2 | √3/2 | 0 | |
| T9 (120°) | √3/2 | 0 | √3/2 | |

Fig. 8

Fig. 9

EP 0 315 717 A1

| | A OUT PUT | B OUT PUT | C OUT PUT | |
|---|---|---|---|---|
| T1 (0°) | 0 | $\sqrt{3}/2$ | $\sqrt{3}/2$ | |
| T2 (30°) | 1/2 | 1 | 1/2 | |
| T3 (60°) | $\sqrt{3}/2$ | $\sqrt{3}/2$ | 0 | |
| T4 (90°) | 1 | 1/2 | 1/2 | |
| T5 (120°) | $\sqrt{3}/2$ | 0 | $\sqrt{3}/2$ | |
| T6 (150°) | 1/2 | 1/2 | 1 | |
| T7 (180°) | 0 | $\sqrt{3}/2$ | $\sqrt{3}/2$ | |
| T8 (210°) | 1/2 | 1 | 1/2 | |
| T9 (240°) | $\sqrt{3}/2$ | $\sqrt{3}/2$ | 0 | |
| T10 (270°) | 1 | 1/2 | 1/2 | |
| T11 (300°) | $\sqrt{3}/2$ | 0 | $\sqrt{3}/2$ | |
| T12 (330°) | 1/2 | 1/2 | 1 | |
| T13 (0°) | 0 | $\sqrt{3}/2$ | $\sqrt{3}/2$ | |
| T14 (30°) | 1/2 | 1 | 1/2 | |

Fig. 10

PHASE "A"
SOUCE

PHASE "A"
OUT PUT

PHASE "B"
SOUCE

PHASE "B"
OUT PUT

PHASE "C"
SOUCE

PHASE "C"
OUT PUT

$T_1$  $T_2$  $T_3$  $T_4$  $T_5$  $T_6$  $T_7$  $T_8$  $T_9$

Fig. 11

| | A OUT PUT | B OUT PUT | C OUT PUT | |
|---|---|---|---|---|
| T1 (0°) | 0 | 0 | $\sqrt{3}/2$ | |
| T2 (60°) | 0 | 0 | 0 | |
| T3 (120°) | $\sqrt{3}/2$ | 0 | 0 | |
| T4 (180°) | 0 | 0 | 0 | |
| T5 (240°) | 0 | $\sqrt{3}/2$ | 0 | |
| T6 (300°) | 0 | 0 | 0 | |
| T7 (0°) | 0 | 0 | $\sqrt{3}/2$ | |
| T8 (60°) | 0 | 0 | 0 | |
| T9 (120°) | $\sqrt{3}/2$ | 0 | 0 | |

Fig. 12

PHASE "A" SOUCE

PHASE "A" OUT PUT

PHASE "B" SOUCE

PHASE "B" OUT PUT

PHASE "C" SOUCE

PHASE "C" OUT PUT

T₁ T₂ T₃ T₄ T₅ T₆ T₇ T₈ T₉

Fig. 13

| | A OUT PUT | B OUT PUT | C OUT PUT | |
|---|---|---|---|---|
| $T_1$ (0°) | 0 | 0 | $\sqrt{3}/2$ | |
| $T_2$ (60°) | $\sqrt{3}/2$ | 0 | 0 | |
| $T_3$ (120°) | $\sqrt{3}/2$ | 0 | 0 | |
| $T_4$ (180°) | 0 | $\sqrt{3}/2$ | 0 | |
| $T_5$ (240°) | 0 | $\sqrt{3}/2$ | 0 | |
| $T_6$ (300°) | 0 | 0 | $\sqrt{3}/2$ | |
| $T_7$ (0°) | 0 | 0 | $\sqrt{3}/2$ | |
| $T_8$ (60°) | $\sqrt{3}/2$ | 0 | 0 | |
| $T_9$ (120°) | $\sqrt{3}/2$ | 0 | 0 | |

Fig. 14

Fig. 15

| | A<br>OUT PUT | B<br>OUT PUT | C<br>OUT PUT | |
|---|---|---|---|---|
| T1<br>(0°) | 0 | 0 | $\sqrt{3}/2$ | |
| T2<br>(30°) | 1/2 | 0 | 1/2 | |
| T3<br>(60°) | $\sqrt{3}/2$ | 0 | 0 | |
| T4<br>(90°) | 1 | 0 | 0 | |
| T5<br>(120°) | $\sqrt{3}/2$ | 0 | 0 | |
| T6<br>(150°) | 1/2 | 1/2 | 0 | |
| T7<br>(180°) | 0 | $\sqrt{3}/2$ | 0 | |
| T8<br>(210°) | 0 | 1 | 0 | |
| T9<br>(240°) | 0 | $\sqrt{3}/2$ | 0 | |
| T10<br>(270°) | 0 | 1/2 | 1/2 | |
| T11<br>(300°) | 0 | 0 | $\sqrt{3}/2$ | |
| T12<br>(330°) | 0 | 0 | 1 | |
| T13<br>(0°) | 0 | 0 | $\sqrt{3}/2$ | |
| T14<br>(30°) | 1/2 | 0 | 1/2 | |

Fig. 16

Fig. 17

Fig. 18

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-B-1 638 878 (THRIGE-TITAN) * column 2, lines 25-51; column 3, lines 31-63 * | 1-3 | H 02 K 29/00 |
| A | GB-A-1 243 657 (THRIGE-TITAN) * page 2, line 63 - page 3, line 73 * | 1-3 | |
| A | DE-B-1 278 603 (LICENTIA) * column 1, line 29 - column 4, line 30 * | 1 | |

TECHNICAL FIELDS SEARCHED (Int. Cl.4)

H 02 K 17/00
H 02 K 29/00
H 02 K 37/00
H 02 K 57/00
H 02 P 6/00

The present search report has been drawn up for all claims

| Place of search | Date of completion of the search | Examiner |
|---|---|---|
| BERLIN | 27-06-1988 | GESSNER E A F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)